# EUROPÄISCHE PATENTANMELDUNG

(11) **EP 1 919 050 A2**
(43) Veröffentlichungstag der Anmeldung: **07.05.2008**
(21) Anmeldenummer: 07119881.6
(22) Anmeldetag: 02.11.2007
(51) Int. Cl.: H02G 3/02

(54) **Montagemodul zur Halterung eines Bedienmoduls in einer Einbauöffnung einer Hohlwand**

(30) Priorität: 03.11.2006 DE 202006016858 U
(71) Anmelder: Zumtobel Lighting GmbH, 6850 Dornbirn (AT)
(72) Erfinder: Rüf, Karl-Heinz, 6850 Dornbirn (AT); Rausch, FH Zeno, 9424 Rheineck (CH); Hobelsberger, Georg, 6900 Bregenz (AT); Roos, Peter, 86925 Fuchstal (DE)
(74) Vertreter: Thun, Clemens

(57) **Zusammenfassung**

Die Erfindung betrifft ein Montagemodul (4) zur Halterung eines Bedienmoduls (5) in einer Einbauöffnung (2) einer Hohlwand (3), mit einer Montagescheibe (9), die einen Tragabschnitt (9a) zum Tragen wenigstens eines weiteren Montagemodulteils zur Halterung des Bedienmoduls (4) und zwei bezüglich dem Tragabschnitt (9a) randseitig versetzte Flanschabschnitte (9b) zur rückseitigen Anlage an der Hohlwand (3) aufweist. Um das Montagemodul (4) für unterschiedlich dicke Hohlwände (3) gebrauchen zu können, sind die Flanschabschnitte (9b) bezüglich dem Tragabschnitt (9a) quer zur Montagescheibe (9) versetzt angeordnet.

## Beschreibung

Die Erfindung betrifft ein Montagemodul nach dem Oberbegriff des Anspruchs 1.

Es ist zur Steuerung von elektrischen Geräten bekannt, ein Bedienmodul vorzusehen, das an einer Bedienungsseite ein oder mehrere Bedienelemente aufweist, mit denen ein oder mehrere elektrische Geräte steuerbar sind, zum Beispiel ein- oder ausschaltbar oder programmierbar sind. Bei den Bedienelementen kann es sich zum Beispiel um Dreh- oder Drucktasten oder Druckflächen handeln, die bei manueller Betätigung einen gewünschten Steuerungs- bzw. Schaltvorgang ausführen. Das Bedienmodul ist von einem für den Aufenthalt von Menschen geeigneten Raum her zugänglich an einer Hohlwand in einer Position angeordnet, in der es auf der Hohlwand angeordnet oder in die Hohlwand versenkt angeordnet ist, sodass die Bedienungsseite mit den Bedienungselementen, insbesondere flache Tastelemente, mit der Wandfläche der Hohlwand im Wesentlichen abschließen. Im ersten Fall ist die Anordnung des Bedienmoduls einfacher, wobei es jedoch von der Wandfläche absteht und somit in den Raum hineinsteht, ihn beeinträchtigt und für Bewegungen eines Raumbewohners im Wege steht. Eine solche Anordnung wird auch mit "Aufputz-Anordnung" bezeichnet. Im zweiten Fall schließt das Bedienmodul im Wesentlichen mit der Wandfläche ab, sodass es den Raum nicht beeinträchtigt und auch nicht im Wege steht. Diese Anordnung wird auch mit "Unterputz-Anordnung" bezeichnet.

In der Praxis gibt es Hohlwände unterschiedlicher Dicke, wodurch die Anordnung und Befestigung eines Montagemoduls in der Einbauöffnung erschwert ist.

Bei solchen Hohlwänden, die zum Beispiel aus einem so genannten Gipskarton oder dergleichen bestehen können, können die Hohlwände je nach gewünschter Stabilität einfach oder zweifach beplankt sein, wobei sich die Dicke der Hohlwand zum Beispiel halbiert bzw. verdoppelt.

Der Erfindung liegt die Aufgabe zugrunde, ein Montagemodul der eingangs angegebenen Art so auszugestalten, dass es sich auch für Hohlwände unterschiedlicher Dicke eignet. Ferner soll eine einfache Ausgestaltung erreicht werden.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Montagemodul sind die Flanschabschnitte bezüglich dem Tragabschnitt quer zur Montagescheibe versetzt angeordnet. Dieser Versatz ermöglicht es in unterschiedlicher Weise, das Montagemodul so an die Dicke der Hohlwand anzupassen, dass es sich zur Aufnahme des Bedienmoduls in der gewünschten vorderseitigen Position an der Hohlwand eignet.

Dies kann zum einen dadurch erfolgen, dass die Größe des Versatzmaßes unter Berücksichtigung der Dicke der Hohlwand bestimmt und die Montagescheibe mit einem entsprechenden Versatz hergestellt wird.

Eine andere Maßnahme besteht darin, die Montagescheibe an zwei unterschiedliche Dicken der Hohlwand dadurch anzupassen, dass die Montagescheibe wahlweise mit einer ihrer beiden Breitseiten mit dem wenigstens einen übrigen Montagemodulteil verbunden wird. Hierdurch lässt sich das Versatzmaß im Wesentlichen halbieren bzw. verdoppeln und das Montagemodul an Hohlwände entsprechend unterschiedlicher Dicke anpassen. Zur Verbindung dient vorzugsweise eine Schraubverbindung, insbesondere mit einander gegenüberliegend angeordneten Schrauben, die so positioniert sind, dass ihre Schraubenköpfe von der Vorderseite der Hohlwand her zugänglich sind. Dies ermöglicht es zum einen, die Montagescheibe allein durch die Einbauöffnung hindurch zu stecken und hinter der Einbauöffnung zu drehen und an der Rückseite der Hohlwand mit den Flanschabschnitten anzulegen und dann das wenigstens eine weitere Montagemodulteil mit der Montagescheibe zu verschrauben.

Die Zugänglichkeit der Schraubenköpfe von vorne ermöglicht es aber auch, dass wenigstens eine weiter Montagemodulteil relativ zur Montagescheibe unter Berücksichtigung der örtlichen Gegebenheiten zu verstellen. Hierdurch bedarf es einer Verstellmöglichkeit, die zum Beispiel durch Langlöcher für die Schrauben in dem einen Verbindungsteil geschaffen werden kann. Dabei ist es besonders vorteilhaft, wenn die Verstellmöglichkeit ein relatives Verdrehen der Montagescheibe und des weiteren Montagemodulteils relativ zueinander ermöglicht.

Um eine Beeinträchtigung des durch die Hohlwand begrenzten Raumes zu vermeiden, ist es besonders vorteilhaft, das Montagemodul so auszugestalten, dass es in einer Position an der Hohlwand positionierbar ist, in der das Bedienmodul mit seiner Vorder- bzw. Bedienungsseite mit der Vorderseite der Hohlwand abschließt.

Zur Halterung des Bedienmoduls dient somit erfindungsgemäß ein Montagemodul, das ein mehrteiliges Vorfertigungsteil ist, das in einer Einbauöffnung der Hohlwand so vormontiert wird, dass das Bedienmodul später, nämlich nach der Fertigstellung der Hohlwand, zum Beispiel durch Beiputzen oder Anstreichen, an dem Montagemodul in der gewünschten Stellung montiert werden kann.

Wesentliches Teil des Montagemoduls ist eine Montagescheibe, die einen mittleren Tragabschnitt zum Tragen wenigstens eines weiteren Montagemodulteils, zum Beispiel einen Rahmen bzw. ein topfförmiges Gehäuse zur Aufnahme des Bedienmoduls aufweist und so in der Hohlwand befestigbar ist, dass das Bedienmodul später anbaubar ist, vorzugsweise in einer mit der vorderseitigen Wandfläche der Hohlwand abschließenden Position oder in einer auf der vorderseitigen Wandfläche der Hohlwand sitzenden Position.

Zur Positionierung der Montagescheibe in der Einbauöffnung dienen zwei von Tragabschnitt randseitig und insbesondere einander gegenüberliegend abstehende und axial versetzte Flanschabschnitte zur rückseitigen Anlage und Befestigung an der Hohlwand, wodurch die Fixierung des Montagemoduls in der Einbauöffnung so gewährleistet ist, dass das Bedienmodul später handhabungsfreundlich anbaubar ist, zum Beispiels mittels einer Klemm- oder Rastverbindung.

Das Montagemodul weist zur Aufnahme des Bedienmoduls vorzugsweise einen Rahmen oder ein vorderseitig offenes Gehäuse auf, der bzw. das vorzugsweise so hoch bemessen ist, dass in der montierten Stellung der vorderseitige Rand mit der Vorderfläche der Hohlwand abschließt. Dies ermöglicht es, die Einbauöffnung gegen diesen Rand beizuputzen, sondern auch das Bedienmodul bei dessen Montage im Rahmen bzw. Gehäuse versenkt anzuordnen.

Der Rahmen bzw. das Gehäuse kann auch dazu dienen, eine Hohlwandbuchse aufzunehmen, die durch ein Loch im Boden des Gehäuses oder auch im Tragabschnitt der Montagescheibe bis in den Hohlraum der Hohlwand ragen kann. Die Hohlwandbuchse kann mittelbar oder unmittelbar zur Aufnahme von elektrischen Bauteilen, zum Beispiel einer Leiterplatte, dienen und ein elektrisches Gegensteckverbindungsteil aufweisen, das mit einem am Bedienmodul angeordneten Steckverbindungsteil korrespondiert und damit beim Anmontieren des Bedienmoduls zur Verbindung zusammengehöriger elektrischer Leitungen zusammensteckbar ist. Im Rahmen der Erfindung können die vorgenannten elektrischen Bauteile auch in einer besonderen Aufnahmebuchse angeordnet sein, die in die Hohlwandbuchse von der Vorderseite her einsteckbar ist.

Die zur lösbaren Verbindung des Bedienmoduls vorhandenen Verbindungselemente, insbesondere Rastelemente, sind einerseits am Bedienmodul angeordnet, wobei sie andererseits an der Hohlwandbuchse oder an der Aufnahmebuchse angeordnet sein können.

Zur Befestigung der Montagescheibe rückseitig an der Hohlwand dient für jeden Flanschabschnitt jeweils wenigstens eine Verschraubung mit einer von der Vorderseite der Hohlwand her zugänglichen Schraube, die durch die Hohlwand hindurch in den zugehörigen Flanschabschnitt einschraubbar ist und diesen gegen die Rückseite der Hohlwand zieht. Dabei ist es besonders vorteilhaft, in den Flanschabschnitten jeweils eine Vielzahl direkt nebeneinander angeordnete Löcher für die Befestigungsschraube vorzusehen, in die die Schraube einschraubbar ist, zum Beispiel in ein Gewinde des Loches oder selbst schneidend. Die direkte Anordnung der Löcher aneinander ermöglicht es, die Schraube ohne eine genaue Positionierung durch die Hohlwand zu bewegen, wobei die Schraube jeweils das nächstliegende Loch selbsttätig findet.

Die Erfindung ist jedoch nicht auf die Montage des Montagemoduls in bzw. an den Hohlwänden von Gebäuden beschränkt, denn es kann sich auch um andere Hohlwände handeln.

Die Erfindung ist auch nicht auf eine Montagemodul mit einer Montagescheibe eingeschränkt, deren Flanschabschnitte bezüglich dem Tragabschnitt axial versetzt angeordnet sind. Gemäß Anspruch 12 bezieht sich die Erfindung auf ein Bedienmodul, das an seinem rückseitigen Rand einen umlaufenden Rücksprung mit einer Stufenfläche aufweist. Diese Ausgestaltung ermöglicht es, das Bedienmodul mit einem hakenförmigen Zugelement im Rücksprung zu hintergreifen und aus der Verbindung mit dem Montagemodul vorzuziehen und somit zu demontieren.

Ein anderer Vorteil des umlaufenden Rücksprungs an der Anbauseite des Bedienmoduls besteht darin, dass bei einer nicht versenkten Anordnung des Bedienmoduls auf der Hohlwand der Rücksprung eine Schattenkante bildet, die einen Blick auf die Randkantenanlage des Bedienmoduls an der Vorderfläche der Hohlwand verhindert und dadurch auch bei nicht gleichmäßig anliegender Anordnung eine gute Anlage und Anordnung sichtbar werden lässt.

Nachfolgend werden vorteilhafte Ausgestaltungen der Erfindung anhand von vereinfachten Zeichnungen näher erläutert. Es zeigt:
- Fig. 1: eine aus wenigstens einem Bedienmodul und einem Montagemodul bestehende Bedieneinheit in perspektivischer Ansicht;
- Fig. 2: den Schnitt II-II in Fig. 1;
- Fig. 3: das Montagemodul in der Draufsicht;
- Fig. 4: den Schnitt III-III in Fig. 2;
- Fig. 5: einen Randabschnitt der Bedieneinheit in einer abgewandelten Anordnung;

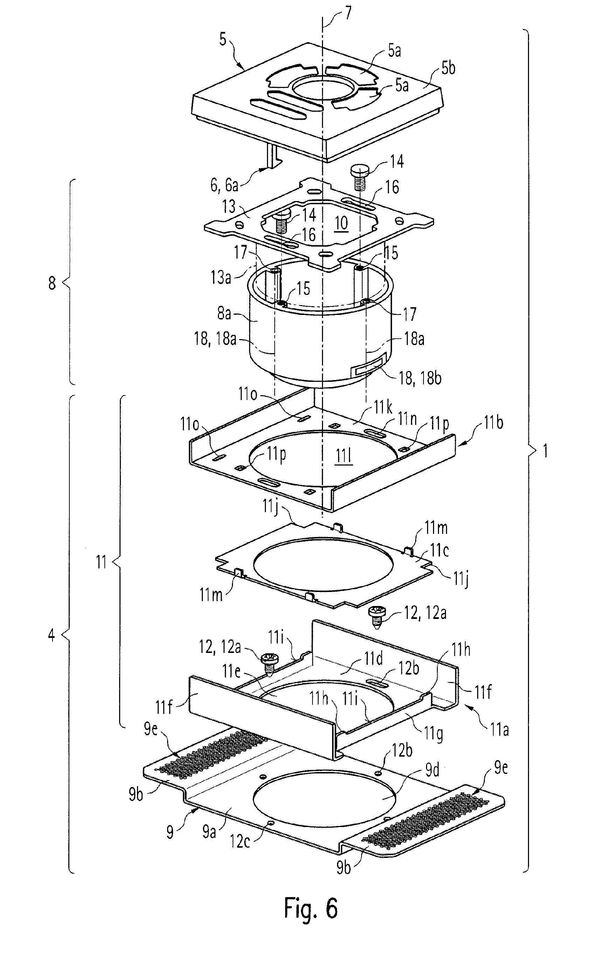

- Fig. 6: eine so genannte Explosionszeichnung der Bedieneinheit mit vertikal voneinander beabstandeten Einzelteilen des Montagemoduls und des Bedienmoduls und dazwischen angeordneten Buchsen.

Die in ihrer Gesamtheit mit 1 bezeichnete Bedieneinheit besteht aus dem in einer Einbauöffnung 2 einer Hohlwand 3 einsetzbaren und an der Hohlwand 3 vormontierbaren Montagemodul 4, an das das Bedienteil 5 lösbar anmontierbar ist, zum Beispiel durch eine Rastvorrichtung 6 mit einem oder mehreren Rastarmen 6a verrastbar ist, von denen nur ein Rastarm 6a sichtbar ist, und die von der Rückseite des Bedienteils 5 abstehen, quer zur Mittelachse 7 des Montagemoduls 4 und des Bedienteils 5 elastisch ausfederbar sind und im montierten Zustand nicht dargestellte Gegenrastteile überdrückbar und somit lösbar hintergreifen.

Zusätzlich zum Montagemodul 4 und dem Bedienmodul 5 kann dazwischen ein Buchsenmodul 8 zur Aufnahme elektrischer Teile vorhanden sein, das beim Ausführungsbeispiel dem Montagemodul 4 zugeordnet ist und nach der Vormontage des Montagemoduls 4 daran bzw. darin befestigbar ist und die Gegenrastteile aufweisen kann.

Wesentliches Bauteil des Montagemoduls 4 ist eine Montagescheibe 9, die aus einem mittleren Tragabschnitt 9a und zwei äußeren Flanschabschnitten 9b besteht, die einander gegenüberliegend randseitig vom Tragabschnitt 9a abstehen und bezüglich diesem axial um das Versatzmaß a versetzt sind. Die Flanschabschnitte 9b sind durch Querstege 9c mit dem Tragabschnitt 9a verbunden, wobei sie mit diesem eine Z-förmige Form bilden.

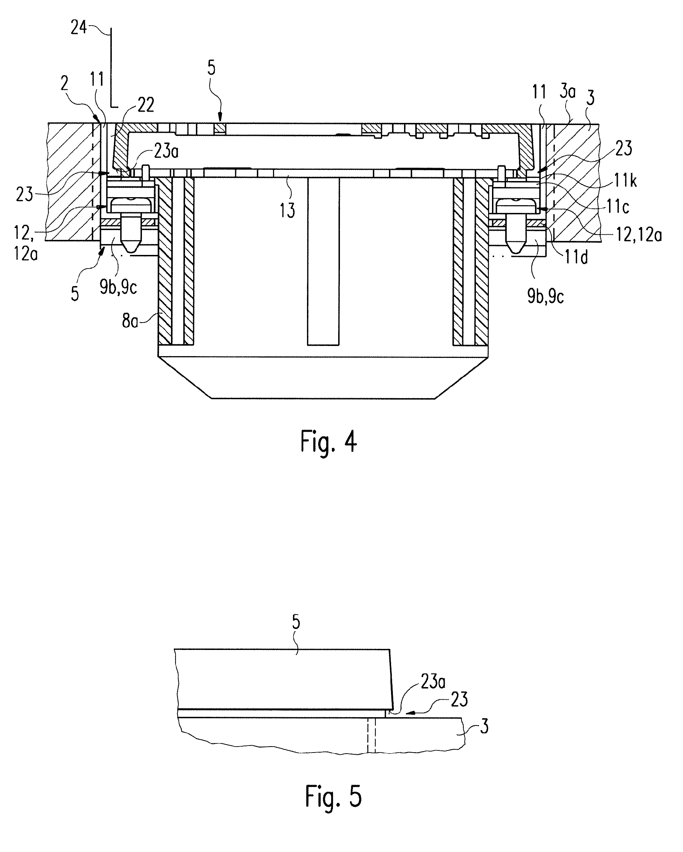

Beim Ausführungsbeispiel weisen der Tragabschnitt 9a und die Flanschabschnitte 9b jeweils viereckige Formen auf. Im mittleren Bereich des Tragabschnitts 9a ist ein vorzugsweise kreisrundes Aufnahmeloch 9d angeordnet, das der Aufnahme noch zu beschreibender Buchsenteile des Buchsenmoduls 8 dient. In den Flanschabschnitten 9b sind eine Vielzahl Schraubenlöcher 9e direkt nebeneinander angeordnet, die jeweils ein sich über einen Großteil der Fläche des zugehörigen Flanschabschnitts 9b erstreckendes Schraubenlochfeld bilden. In Fig. 4 sind die Flanschabschnitte 9b bezüglich dem Tragabschnitt 9a nach vorne versetzt angeordnet.

Zur Aufnahme des Bedienmoduls 5 von vorne weist das Montagemodul 4 einen parallel zur Anbauebene bzw. Vorderfläche 3a der Hohlwand 3 angeordneten Rahmen 11 auf, der durch eine Schraubverbindung 12 mit zum Bespiel zwei bezüglich der Mittelachse 7 einander gegenüberliegend angeordneten Schrauben 12a mit dem Tragabschnitt 9a verbunden ist und an dessen Vorderseite angeordnet ist bzw. anliegt. Der Rahmen 11 besteht aus zwei Rahmenteilen 11a, 11b und einer dazwischen angeordneten Positionierplatte 11c. Die Form der Rahmenteile 11a, 11b und der Positionierplatte 11c ist vorzugsweise ebenfalls viereckig. Das am Tragabschnitt 9a anliegende hintere Rahmenteil 11 a weist eine Bodenwand 11d auf, in der sich ein Aufnahmeloch 11e befindet, dessen Querschnittsgröße an die Querschnittsgröße des Aufnahmelochs 9d angepasst sein kann. Die Schrauben 12a sind von vorne zugänglich durch Schraubenlöcher 12b in der Bodenwand 11d und in Gewindelöcher 12c im Tragabschnitt 9a einschraubbar.

Das hintere Rahmenteil 11a weist jeweils einander gegenüberliegend zwei hohe Rahmenwände 11 f und niedrige Rahmenwände 11g auf, die jeweils vom Rand der Bodenwand 11d nach oben abstehen und vorzugsweise als Stanz-Biegeteil in Fig. 5 abgewinkelt sind. In den Endbereichen der niedrigen Rahmenwände 11 g sind nach oben abstehende Wandnasen 11h angeordnet, die jeweils durch eine dazwischen angeordnete Vertiefung 11i der Rahmenwände 11g gebildet sind. Die Positionierplatte 11c weist in ihren Eckenbereichen winkelförmige Ausnehmungen 11j auf, die von den Wandnasen 11a durchragt sind, wenn die Positionierplatte 11c in den Vertiefungen 11 e auf den Rahmenwänden 11g aufliegt.

Das vordere Rahmenteil 11b weist ebenfalls eine Bodenwand 11k und ein darin angeordnetes Aufnahmeloch 111 auf, dessen Querschnittsgröße etwa den Aufnahmelöchern 9d, 11e entspricht.

Die Positionierplatte 11c weist mehrere, zum Beispiel vier Stück, Winkelnasen 11m auf, die nach oben bzw. zur Vorderseite hin abstehen. Das vordere Rahmenteil 11b weist in seiner Bodenwand 11k für die Schrauben 12a Werkzeug-Zugangslöcher 11n, für die Wandnasen 11h Schlitze 11o und für die Winkelnasen 11m Löcher 11p auf, wobei die Nasen 11h und/oder 11m in den zugehörigen Löchern befestigt sein können, zum Beispiel durch Umbiegen, Verstemmen oder Schweißen.

Die Höhe der niedrigen Rahmenwände 11g ist so groß, dass diese und die hohen Rahmenwände 11f an ihren freien Rändern in einer sich parallel zur Anbauebene erstreckenden Ebene liegen und zum Beispiel zusätzlich miteinander verbunden sein können, zum Beispiel durch Schweißen.

Die Schraubenlöcher 12b und die Zugangslöcher 11n in den Rahmenteilen 11a, 11b sind vorzugsweise durch sich in die Umfangrichtung erstreckende Langlöcher gebildet, die eine Verstellung bzw. Verdrehung des Rahmens 11 relativ zur Montagescheibe 9 ermöglichen. Die Köpfe der Schrauben 12 a befinden sich zwischen der Bodenwand 11d und der Positionierplatte 11c, wobei sie von vorne durch die Zugangslöcher 11n hindurch für ein Schraubendrehwerkzeug zugänglich sind.

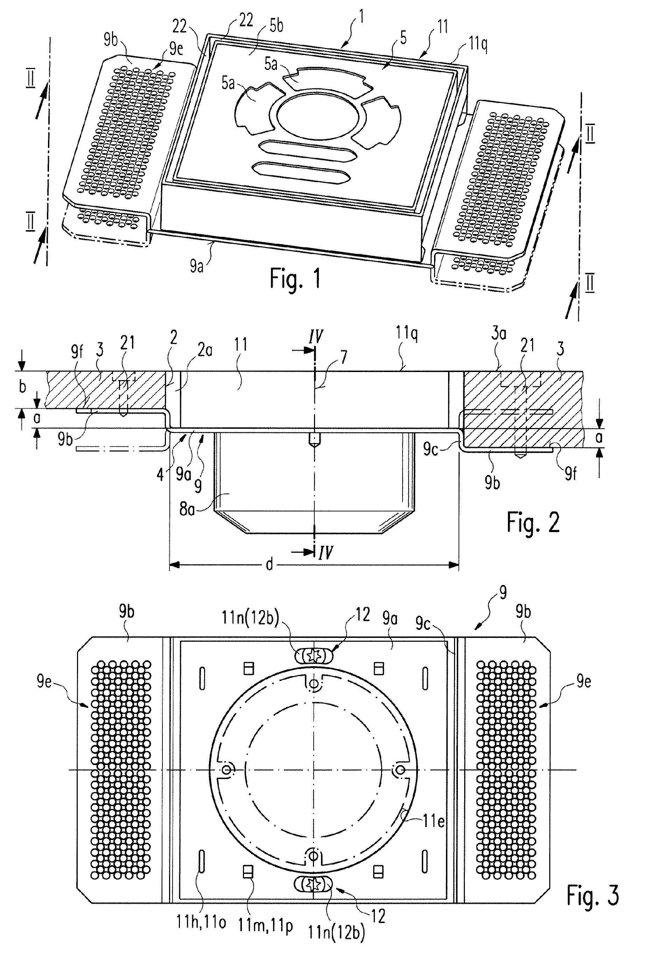

In der in Fig. 2 dargestellten montierten Stellung entspricht der Abstand b zwischen dem freien Rand 11q des Rahmens 11 und den vorderseitigen Anlageflächen 9f der Flanschabschnitte 9b der Dicke der Hohlwand 3, so dass der freie Rand 11q in der Ebene der Vorderfläche 3a (Anbaufläche) der Hohlwand 3 angeordnet ist.

Das Buchsenmodul 8 besteht beim Ausführungsbeispiel aus einer an sich bekannten Hohlwandbuchse 8a und einer vorderseitig von dieser angeordneten Befestigungsplatte 13, die durch ein zentrales Loch 10 als Ringflansch ausgebildet ist, und von der rückseitig gegebenenfalls eine angedeutet dargestellte Aufnahmebuchse 13a zur Aufnahme von elektrischen Bauteilen abstehen kann. Die Befestigungsplatte 13 ist durch Befestigungsschrauben 14 an der Vorderseite der Hohlwandbuchse 8a lösbar befestigbar, wobei die Schrauben 14 Schraubenlöcher 15, 16 in der Befestigungsplatte 14 und in der Wandung der Hohlwandbuchse 8a durchfassen bzw. in ein darin vorhandenes Gewinde einfassen. Die Schraubenlöcher 15 sind in innenseitigen Wülsten der Wandung der Hohlwandbuchse 8a angeordnet.

Die Durchgangslöcher 15 sind vorzugsweise sich in der Umfangsrichtung erstreckende Langlöcher, um die Befestigungsplatte 13 und gegebenenfalls auch die Hohlwandbuchse 8a dreheinstellen zu können.

Zwei weitere, um 90° verdreht angeordnete Löcher 17 in der Wandung der Hohlraumbuchse 8a dienen der Aufnahme von andeutungsweise dargestellten und von vorne mit einem Drehwerkzeug zugänglichen Stellschrauben 18a, die Teile einer Fixiervorrichtung 18 sind, mittels der die Hohlraumbuchse 8a bzw. das Buchsenmodul 8 in dem Montagemodul 4 fixierbar ist. Die wahlweise Fixierung erfolgt durch ein Drehen der Stellschrauben 18a durch ein an ihren Köpfen angreifenden Drehwerkzeug, wobei die am hinteren Ende der Stellschrauben 18 befestigte und in einer Ausnehmung der Hohlwandbuchse 8a angeordnete Fixierarme 18b seitlich in eine Befestigungsstellung ausschwenkbar sind, in der sie jeweils eine Fixierkante am Montagemodul 4 hintergreifen, zum Beispiel den Tragabschnitt 9a oder die Positionierplatte 11c hintergreifen.

Das Bedienmodul 5 weist ein oder mehrere Bedienelemente 5a auf, die an der Vorderseite des Bedienmoduls 5 angeordnet sind oder von dieser Seite zugänglich sind und dazu dienen, elektrische Steuerungen durchzuführen oder zu beenden. Das Bedienmodul 5 kann ein Gehäuse in Form eines flachen Kastens gemäß Fig. 2 aufweisen, der rückseitig offen ist, und in dessen Öffnungsbereich nicht dargestellte elektrische Steckverbindungsteile angeordnet sind, die in der zusammen- bzw. eingesteckten Stellung des Bedienmoduls 5 mit ebenfalls nicht dargestellten Steckverbindungsteilen des Buchsenmoduls 8 zusammengesteckt sind. Von den zuletzt genannten Steckverbindungsteilen erstrecken sich nicht dargestellte elektrische Leitungen in der Hohlwand 3 zu ansteuerbaren elektrischen Verbrauchern.

Die Dicke des Bedienmoduls ist so groß ausgebildet, dass das Bedienmodul 5 mit seinen Bedienelementen 5a oder mit der Vorderseite 5b seines flachen Körpers mit der Vorderseite 3a der Hohlwand im Wesentlichen abschließt.

Nachfolgend werden zunächst die Anordnung des Montagemoduls 4 und dann auch die Vervollständigung zur Bedieneinheit 1 beschrieben.

An der für die Bedieneinheit 1 vorgesehenen Stelle wird zunächst in der Hohlwand 3 die Einbauöffnung 2 eingearbeitet, deren Querschnittsform und -größe an die Querschnittsabmessung c und den Abstand d zwischen den Querstegen 9c so angepasst ist, dass das Montagemodul 4 oder nur dessen Montagescheibe 9 mit Bewegungsspiel in die Einbauöffnung 2 einsteckbar und nach einer Drehung hinter der Einbauöffnung 2 mit den Flanschabschnitten 9b gegen die Rückseite der Hohlwand 3 setzbar ist. Dabei ist unter Berücksichtigung der Wanddicke die Montagescheibe 9 in einer Position gegen die Rückseite der Hohlwand 3 zu setzen, in der das Versatzmaß a für eine dünne Hohlwand 3 nach vorne gerichtet ist (in Fig. 2 links dargestellt) und für eine dicke Hohlwand 3 nach hinten gerichtet ist (in Fig. 2 rechts dargestellt). In dieser rückseitig anliegenden Stellung wird die Montagscheibe 9 durch von vorne in die Hohlwand 3 eingebrachte Befestigungsschrauben 21 verschraubt. Beim Einführen der Befestigungsschrauben 21 durch vorher in die Hohlwand 3 eingebohrte Löcher oder durch Bohren mittels den Befestigungsschrauben 21 durch die Hohlwand 3 finden die Befestigungsschrauben 21 aufgrund der Anordnung der Schraubenlöcher 9e direkt nebeneinander selbsttätig ein passendes Schraubenloch 9e. Jeder Flanschabschnitt 9b kann durch eine oder durch zwei voneinander beabstandete Schrauben 21 verschraubt werden.

Danach kann der Rahmen 11 von vorne gegen der Tragabschnitt 9a gesetzt und ebenfalls verschraubt sowie ausgerichtet werden.

Es ist auch möglich, das Montagemodul 4 nach vorheriger Ausrichtung unter Berücksichtigung der Dicke der Hohlwand 3 der und einer entsprechenden Befestigung mit dem Rahmen 11 als Einheit durch die Einbauöffnung 2 einzuführen, dahinter zu drehen und mit dem Flanschabschnitt 9b gegen die Rückseite der Hohlwand 3 zu setzen und in vorbeschriebener Weise daran zu befestigen.

Nach beiden vorgenannten Vorgehensweisen kann die zwischen dem Rahmen 11 und dem Rand der Einbauöffnung 2 vorhandene Fuge 2a verfüllt werden, zum Beispiel durch Spachteln. Hierbei erweist sich der Rahmen 11 als eine vorteilhafte Begrenzungswand zur stabilen und sauberen Begrenzung des Einbauöffnungsrandes.

Direkt nach dieser Montage des Montagemoduls 4 oder vor einem späteren Anbau des Bedienmoduls 5 kann das Buchsenmodul 8 eingebaut werden. Beim Ausführungsbeispiel erfolgt dies zunächst durch den Einbau der Hohlwandbuchse 8a und dann durch den Einbau der Befestigungsplatte 13 gegebenenfalls mit der daran zum Beispiel einteilig befestigten Aufnahmebuchse 13a mit den Befestigungsschrauben 14. Wenn die Stellschrauben 18a für ein Drehwerkzeug von vorne zugänglich sind, können die Hohlwandbuchse 8a und die Aufnahmebuchse 13a mit der Befestigungsplatte 13 auch vor der Arretierung mit den Stellschrauben 18a in dem Montagemodul 4 mit den Befestigungsschrauben 14 aneinander befestigt werden.

Danach bedarf es noch des Anbaus des Bedienmoduls 5, wonach die Bedieneinheit 1 komplett montiert ist.

Die Außenquerschnittsabmessungen des, insbesondere viereckigen, Bedienmoduls 5 sind vorzugsweise etwas kleiner als die Innenabmessungen des Rahmens 11. Hierdurch besteht im montierten Zustand ein umlaufender Spalt 22 zwischen dem Bedienmodul 5 und dem Rahmen 11, wodurch eine umlaufende Schattenfuge gebildet ist. Der Spalt 22 verbessert und erleichtert die Montage bzw. Demontage der Bedieneinheit 1 und verleiht ihr eine qualitative Anordnung und Ausbildung.

Wie insbesondere aus Fig. 4 und Fig. 5 zu entnehmen ist, ist am hinteren Rand des Bedienmoduls 5 bzw. dessen Gehäuses 5b ein Rücksprung 23 in Form einer Stufenausnehmung ausgebildet, die nach hinten axial ausmündet und deren Stufenfläche 23a ein Widerlager bildet, hinter das ein in den Spalt 22 einführbares Abziehwerkzeug 24 zum Lösen bzw. Zurückziehen des Bedienmoduls 5 aus seiner Verbindung setzbar ist.

Das Bedienmodul 5 mit dem Rücksprung 23 ist aber auch bei einer abgewandelten Anordnung der Bedieneinheit 1 gemäß Fig. 5 vorteilhaft, bei der das Bedienmodul 5 nicht in der Hohlwand 3 versenkt angeordnet ist, sondern auf der Vorderseite 3a der Hohlwand 3 aufsitzt. Insbesondere bei einer solchen Anordnung verbessert der Rücksprung 23 die Anlage des Bedienmoduls 5 an der Hohlwand 3 dadurch, dass der Rücksprung im Sinne einer Schattenkante Unebenheiten und daraus resultierende Anlagespalte nicht sehen lässt und deshalb die Anlage des Bedienmoduls 5 an der Hohlwand 3 verbessert.

Um eine Korrosion der Teile insbesondere des Montagemoduls 4 zu vermeiden, besteht diese aus insbesondere gegen Feuchtigkeit korrosionsbeständigem Material, zum Beispiel legiertem Stahl wie Chrom-Nickelstahl.

Die Hohlwandbuchse 8a und die Aufnahmebuchse 13a bestehen vorzugsweise mit der Befestigungsplatte 13 aus Kunststoff.

## Patentansprüche

1. Montagemodul (4) zur Halterung eines Bedienmoduls (5) in einer Einbauöffnung (2) einer Hohlwand (3), mit einer Montagescheibe (9), die
- einen Tragabschnitt (9a) zum Tragen wenigstens eines weiteren Montagemodulteils zur Halterung des Bedienmoduls (4) und
- zwei bezüglich dem Tragabschnitt (9a) randseitig versetzte Flanschabschnitte (9b) zur rückseitigen Anlage an der Hohlwand (3) aufweist,
**dadurch gekennzeichnet,**
**dass** die Flanschabschnitte (9b) bezüglich dem Tragabschnitt (9a) quer zur Montagescheibe (9) versetzt angeordnet sind.

2. Montagemodul nach Anspruch 1,
**dadurch gekennzeichnet,**
**dass** die Montagescheibe (9) wahlweise mit ihrer einen oder anderen Breitseite mit dem weiteren Montagemodulteil verbindbar ist, insbesondere mittels Schrauben (12a) verschraubbar ist.

3. Montagemodul nach Anspruch 1 oder 2,
**dadurch gekennzeichnet,**
**dass** das wenigstens eine weitere Montagemodulteil an seiner der Montagescheibe (9) abgewandten Vorderseite mit der vorderen Wandfläche (3a) der Hohlwand (3) abschließt.

4. Montagemodul nach einem der vorherigen Ansprüche,
**dadurch gekennzeichnet,**
**dass** das wenigstens eine weitere Montagemodulteil einen vorderseitig offenen Rahmen (11) zur Aufnahme des Bedienmoduls (5) aufweist.

5. Montagemodul nach Anspruch 4,
**dadurch gekennzeichnet,**
**dass** der Rahmen (11) Innenquerschnittsabmessungen aufweist, die zwecks Bildung eines umlaufenden Spaltes (22) größer sind als die Außenquerschnittsabmessungen des Bedienmoduls.

6. Montagemodul nach einem der vorherigen Ansprüche,
**dadurch gekennzeichnet,**
**dass** das Bedienmodul (5) mit seiner Vorderseite oder mit den Vorderseiten seiner Bedienelemente (5a) mit dem freien Rand (11q) des Rahmens (11) und/oder mit der Vorderseite (3a) der Hohlwand (3) abschließt.

7. Montagemodul nach einem der Ansprüche 4 bis 6,
**dadurch gekennzeichnet,**
**dass** der Rahmen (11) eine Bodenwand (11d) aufweist.

8. Montagemodul nach Anspruch 7,
**dadurch gekennzeichnet,**
**dass** in der Bodenwand (11d) und vorzugsweise auch im Tragabschnitt (9a) ein, insbesondere rundes Aufnahmeloch (11 e) angeordnet ist.

9. Montagemodul nach einem der vorherigen Ansprüche 2 bis 6,
**dadurch gekennzeichnet,**
**dass** die Schrauben (12a) von der Vorderseite her zugänglich sind.

10. Montagemodul nach einem der vorherigen Ansprüche,
**gekennzeichnet durch**
eine Schraubverbindung mit wenigstens einer von vorne in den zugehörigen Flanschabschnitt (9b) einschraubbaren Befestigungsschraube (21) zum rückseitigen Befestigen der Flanschabschnitte (9b) an der Hohlwand (3).

11. Montagemodul nach Anspruch 10,
**dadurch gekennzeichnet,**
**dass** in den Flanschabschnitten (9b) jeweils ein durch direkt nebeneinander angeordnete Befestigungslöcher (9e) gebildetes Lochfeld angeordnet ist.

12. Bedieneinheit, bestehend aus einem Montagemodul (4), insbesondere nach einem der vorherigen Ansprüche, und einem von dem Montagemodul (4) gehaltenen Bedienmodul (5),
**dadurch gekennzeichnet,**
**dass** das Bedienmodul (5) an seinem rückseitigen Rand einen umlaufenden Rücksprung (23) aufweist.

13. Bedieneinheit nach Anspruch 12,
**dadurch gekennzeichnet,**
**dass** ihm ein hakenförmiges Werkzeug (24) zum Hintergreifen einer Stufenfläche (23a) des Rücksprungs zugeordnet ist.
